# EUROPÄISCHE PATENTANMELDUNG

(11) **EP 2 803 686 A1**
(43) Veröffentlichungstag der Anmeldung: **19.11.2014**
(21) Anmeldenummer: 13167913.6
(22) Anmeldetag: 15.05.2013
(51) Int. Cl.: C08G 18/65, C08G 18/69, C08G 18/32, C09J 175/04

(54) **Zweikomponentige Polyurethanzusammensetzung**

(71) Anmelder: Sika Technology AG, 6340 Baar (CH)
(72) Erfinder: Roock, Wolfgang, 25482 Appen (DE); Kelch, Steffen, 8102 Oberengstringen (CH); Heidtmann, Matthias, 23564 Lübeck (DE)
(74) Vertreter: Sika Patent Attorneys

(57) **Zusammenfassung**

Die vorliegende Erfindung betrifft eine Polyurethanzusammensetzung bestehend aus einer ersten und einer zweiten Komponente, wobei die erste Komponente ein alkoxyliertes aromatisches Diol, ein niedermolekulares aliphatisches oder cycloaliphatisches Diol und ein spezielles Polybutadienpolyol in spezifischen Verhältnissen umfasst. Die ausgehärtete Zusammensetzung zeichnet sich durch gute Haftungseigenschaften, durch eine nur schwach von der Temperatur abhängige Festigkeit im Temperaturbereich von -35 bis +85 °C und durch eine hohe Festigkeit und Elastizität aus. Sie ist besonders geeignet als struktureller Klebstoff zum Verkleben von zwei Substraten.

## Beschreibung

### Technisches Gebiet

Die Erfindung betrifft das Gebiet der zweikomponentigen Polyurethanzusammensetzungen und ihre Verwendung, insbesondere als Klebstoff oder als Vergussmasse.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf Festigkeit und Anhaftungskräfte an solche Klebstoffe gestellt, da derartige Klebstoffe Elemente von Last tragenden Strukturen darstellen.

Es besteht insbesondere der Wunsch nach Klebstoffen, die hohe Festigkeiten im Sinne struktureller Verklebungen und trotzdem eine hohe Dehnbarkeit über einen möglichst grossen Temperaturbereich verbunden mit einer wenig ausgeprägten Abhängigkeit der Festigkeit von der Temperatur aufweisen. Gewünscht sind weiterhin Klebstoffe, welche eine gute Haftung auf metallischen Substraten zeigen und sowohl bei Umgebungstemperatur als auch in einem durch Wärme beschleunigten Aushärtungsprozess zur Endfestigkeit gehärtet werden können.

### Darstellung der Erfindung

Aufgabe der vorliegenden Erfindung ist es daher, eine zweikomponentige Polyurethanzusammensetzung zur Verfügung zu stellen, welche über eine hohe Festigkeit und Dehnung bei einer nur schwach ausgeprägten Abhängigkeit der mechanischen Eigenschaften von der Temperatur verfügt und gute Haftungseigenschaften auf metallischen Untergründen aufweist.

Überraschenderweise wird diese Aufgabe mit der erfindungsgemässen Polyurethanzusammensetzung gelöst. Sie weist einerseits einen hohen Gehalt an Polybutadienpolyol auf. Weiterhin enthält sie mindestens ein alkoxyliertes aromatisches Diol und mindestens ein niedermolekulares aliphatisches oder cycloaliphatisches Diol in speziellen Verhältnissen. Überraschenderweise wurde festgestellt, dass diese Zusammensetzung über eine hohe Festigkeit und Elastizität, eine nur schwach ausgeprägte Abhängigkeit der mechanischen Eigenschaften von der Temperatur und sehr gute Haftungseigenschaften auf metallischen Substraten verfügt. Dies ist insbesondere aus den hohen Werten für die Zugscherfestigkeit im Temperaturbereich von -35 bis 85 °C ersichtlich. Zudem ist die Zusammensetzung besonders beständig gegenüber Feuchtigkeit.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Polyurethanzusammensetzung bestehend aus einer ersten und einer zweiten Komponente; wobei
- die erste Komponente
   - mindestens ein alkoxyliertes aromatisches Diol A1 mit einem mittleren Molekulargewicht im Bereich von 300 bis 1 '000 g/mol,
   - mindestens ein aliphatisches oder cycloaliphatisches Diol A2 mit einem Molekulargewicht im Bereich von 90 bis 200 g/mol, welches kein lineares Alkylendiol mit zwei primären OH-Gruppen darstellt,
   - mindestens ein Polybutadienpolyol **A3** mit einer mittleren OH-Funktionalität im Bereich von 2.1 bis 2.9, insbesondere 2.3 bis 2.7, und mit einem mitleren Molekulargewicht im Bereich von 2000 bis 4000 g/mol, insbesondere 2500 bis 3000 g/mol, umfasst, und
- die zweite Komponente
   - mindestens ein Polyisocyanat umfasst;
      wobei das Diol **A1,** das Diol **A2** und das Polybutadienpolyol **A3** in einer solchen Menge vorhanden sind, dass
      - das Gewichtsverhältnis **A1/A2** im Bereich von 0.1 bis 1, bevorzugt 0.2 bis 0.7, insbesondere 0.3 bis 0.7, liegt,
      - das Gewichtsverhältnis **A3/(A1+A2)** im Bereich von 3 bis 9, bevorzugt 4 bis 8, insbesondere 5 bis 8, liegt, und
      - der Anteil an Polybutadienpolyol **A3** bezogen auf alle in der ersten Komponente vorhandenen Polyole im Bereich von 50 bis 90 Gewichts-%, bevorzugt 65 bis 90 Gewichts-%, insbesondere 75 bis 90 Gewichts-%, liegt.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Als "Offenzeit" wird in diesem Dokument die Zeit bezeichnet, innerhalb welcher die zu verklebenden Teile gefügt sein müssen, nachdem die Komponenten vermischt sind.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul), insbesondere im Dehnungsbereich 0.05 bis 0.25 %, gemeint sind.

Als "Raumtemperatur" wird im vorliegenden Dokument eine Temperatur von 23 °C bezeichnet.

Die erste Komponente der Zusammensetzung umfasst mindestens ein alkoxyliertes aromatisches Diol **A1** mit einem mittleren Molekulargewicht im Bereich von 300 bis 1'000 g/mol.

Beim alkoxylierten aromatischen Diol **A1** handelt es sich insbesondere um ein Polyetherdiol mit einem aromatischen Anteil, wie es insbesondere durch Alkoxylierung eines aromatischen Diols mit zwei phenolischen OH-Gruppen erhältlich ist.

Bevorzugt stellt das alkoxylierte aromatische Diol **A1** ein ethoxyliertes und/oder propoxyliertes und/oder butoxyliertes aromatisches Diol dar, insbesondere ein ethoxyliertes und/oder propoxyliertes aromatisches Diol. Diese Diole sind besonders gut zugänglich.

Besonders bevorzugt stellt das alkoxylierte aromatische Diol **A1** ein propoxyliertes aromatisches Diol dar. Diese Diole ergeben gut verarbeitbare Klebstoffe mit guten Haftungseigenschaften im ausgehärteten Zustand.

Der aromatische Anteil des alkoxylierten aromatischen Diols **A1** stellt bevorzugt einen Benzolrest, Naphthalinrest, Diphenylmethanrest, 1,1-Diphenylethanrest, 2,2-Diphenylpropanrest, Diphenyletherrest, Benzophenonrest, Bis-(phenyl)sulfonrest oder Biphenylrest dar.

Davon bevorzugt sind der Diphenylmethanrest und der 2,2-Diphenylpropanrest. Diese aromatischen Reste sind abgeleitet von Bisphenol F bzw. Bisphenol A. Solche alkylierten aromatischen Diole **A1** ergeben gut verarbeitbare Zusammensetzungen mit besonders hohen Festigkeiten.

Besonders bevorzugt stellt das alkoxylierte aromatische Diol **A1** ein propoxyliertes Bisphenol A oder ein propoxyliertes Bisphenol F, insbesondere ein propoxyliertes Bisphenol A, dar. Damit werden Zusammensetzungen mit besonders guten Haftungseigenschaften erhalten.

Das alkoxylierte aromatische Diol **A1** weist bevorzugt ein mittleres Molekulargewicht im Bereich von 350 bis 500 g/mol auf. Diese Diole **A1** ermöglichen besonders hohe Festigkeiten.

Die erste Komponente der Zusammensetzung umfasst weiterhin mindestens ein aliphatisches oder cycloaliphatisches Diol **A2** mit einem Molekulargewicht im Bereich von 90 bis 200 g/mol, welches kein lineares Alkylendiol mit zwei primären OH-Gruppen darstellt. Das Diol **A2** stellt also beispielsweise nicht 1,4-Butandiol oder 1,5-Pentandiol dar. Mit solchen linearen Diolen werden Zusammensetzungen mit unbefriedigenden Zugscherfestigkeiten und Zugfestigkeiten bei Raumtemperatur und höheren Temperaturen erhalten.

Bevorzugt als Diol **A2** sind verzweigte Alkylendiole, Alkylendiole mit einer primären und einer sekundären Hydroxylgruppe sowie cycloaliphatische Diole.

Bevorzugt ist das Diol **A2** ausgewählt aus der Gruppe bestehend aus 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Davon bevorzugt sind 1,2-Butandiol, 1,3-Butandiol, 1,2-Pentandiol, 2-Methyl-1,4-butandiol, 2,2-Dimethyl-1,3-propandiol (Neopentylglykol), 3-Methyl-1,5-pentandiol, 1,2-Hexandiol, 1,2-Octandiol, 3,6-Octandiol und 2-Ethyl-1,3-hexandiol.

Am meisten bevorzugt als Diol **A2** ist 2-Ethyl-1,3-hexandiol. Dieses Diol ermöglicht Zusammensetzungen, welche bei der Aushärtung besonders hohe Werte für die Zugscherfestigkeit bei hohen Temperaturen ermöglicht.

Die erste Komponente der Zusammensetzung umfasst weiterhin mindestens ein Polybutadienpolyol **A3** mit einer mittleren OH-Funktionalität im Bereich von 2.1 bis 2.9, insbesondere 2.3 bis 2.7, und einem mittleren Molekulargewicht im Bereich von 2000 bis 4000 g/mol, insbesondere 2500 bis 3000 g/mol.

Solche Polybutadienpolyole sind insbesondere erhältlich durch die Polymerisation von 1,3-Butadien und Allylalkohol in einem geeigneten Verhältnis oder durch die Oxidation von geeigneten Polybutadienen.

Geeignete Polybutadienpolyole sind insbesondere Polybutadienpolyole, welche Strukturelemente der Formel (I) und gegebenenfalls Strukturelemente der Formeln (II) und (III) enthalten.

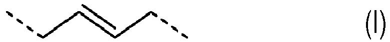

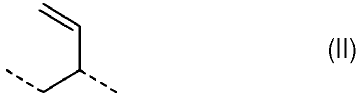

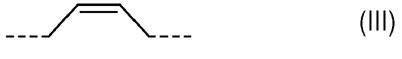

Bevorzugte Polybutadienpolyole enthalten
40 bis 80 %, insbesondere 55 bis 65 % des Strukturelements der Formel (I),
0 bis 30 %, insbesondere 15 bis 25 %, des Strukturelements der Formel (II),
0 bis 30 %, insbesondere 15 bis 25 %, des Strukturelements der Formel (III).

Besonders geeignete Polybutadienpolyole sind beispielweise erhältlich von Cray Valley unter dem Handelsnamen Poly bd^{®} R-45HTLO oder Poly bd^{®} R-45M.

Solche Polybutadienpolyole begünstigen zusammen mit den Diolen **A1** und A2 ausgehärtete Zusammensetzungen mit weitgehend temperaturunabhängiger Festigkeit.

Das Diol **A1** und das Diol **A2** sind in der Zusammensetzung in einer solchen Menge vorhanden, dass das Gewichtsverhältnis **A1/A2** im Bereich von 0.1 bis 1, bevorzugt 0.2 bis 0.7, insbesondere 0.3 bis 0.7, liegt. In diesem Bereich weist die Zusammensetzung sehr gute Haftungseigenschaften bei hoher Festigkeit auf.

Weiterhin sind das Diol **A1,** das Diol **A2** und das Polybutadienpolyol **A3** in der Zusammensetzung in einer solchen Menge vorhanden, dass das Gewichtsverhältnis **A3/(A1+A2)** im Bereich von 3 bis 9, bevorzugt 4 bis 8, insbesondere 5 bis 8, liegt. In diesem Bereich weist die Zusammensetzung eine hohe Festigkeit und eine hohe Dehnbarkeit bei guter Elastizität auf.

Weiterhin liegt der Anteil an Polybutadienpolyol **A3** bezogen auf alle in der ersten Komponente vorhandenen Polyole im Bereich von 50 bis 90 Gewichts-%, bevorzugt 65 bis 90 Gewichts-%, insbesondere 75 bis 90 Gewichts-%. Dies bedeutet, dass die Zusammensetzung einen sehr hohen Anteil an Polybutadienpolyol **A3** enthält, auch wenn zusätzlich zu den Diolen **A1** und **A2** und dem Polybutadienpolyol **A3** in der ersten Komponente weitere Polyole vorhanden sind. Der hohe Gehalt an Polybutadienpolyol **A3** gewährleistet die erwünschten temperaturunabhängigen mechanischen Eigenschaften und die hohe Beständigkeit gegenüber Feuchtigkeit der beschriebenen Zusammensetzung.

In einer Ausführungsform der Erfindung kann die erste Komponente zusätzlich einen Monoalkohol **A4** mit einem Molekulargewicht im Bereich von 140 bis 340 g/mol, umfassen, welcher insbesondere mindestens eine Ethergruppe enthält, wobei der Monoalkohol **A4** in einer solchen Menge vorhanden ist, dass das Gewichtsverhältnis **A4/(A1+A2)** im Bereich von 0.1 bis 0.5, bevorzugt 0.2 bis 0.4, liegt. Der Monoalkohol kann insbesondere die Verarbeitbarkeit der Zusammensetzung und die Temperaturunabhängigkeit der Zugscherfestigkeit verbessern.

Als Monoalkohol **A4** geeignet sind insbesondere alkoxylierte Derivate von Phenol, insbesondere ethoxyliertes oder propoxyliertes Phenol. Besonders geeignet als Monoalkohol **A4** ist 1-Phenoxy-2-propanol. Ein solcher Monoalkohol kann die Viskosität der ersten Komponente besonders gut erniedrigen, was vorteilhaft für die Verarbeitbarkeit der Zusammensetzung sein kann, und er kann die elastischen Eigenschaften in der Kälte verbessern.

In einer Ausführungsform der Erfindung ist die Zusammensetzung frei von Monoalkohol **A4.** Eine solche Zusammensetzung hat eine besonders hohe Festigkeit bei hohen Temperaturen und ein besonders temperaturunabhänges Elastizitätsmodul.

Die zweite Komponente der Zusammensetzung umfasst mindestens ein Polyisocyanat. Geeignete Polyisocyanate sind insbesondere monomere Di- oder Triisocyanate, sowie Oligomere, Polymere und Derivate der monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3-und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MD1), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyi-1,3- und -1,4-xylylendiisocyanat (m- und p-TMXDI), Bis-(1-lsocyanato-1-methyl-ethyl)naphthalin, Dimer- und Trimerfettsäureisocyanate wie 3,6-Bis-(9-isocya-natononyl)-4,5-di-(1-heptenyl)cyclohexen (Dimeryldiisocyanat) und α,α,α',α',α",α"-Hexamethyl-1,3,5-mesitylentriisocyanat.

Davon bevorzugt sind MDI, TDI, HDI und IPDI.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur^{®} N 100 und N 3200 (von Bayer), Tolonate^{®} HDB und HDB-LV (von Rhodia) und Duranate^{®} 24A-1 00 (von Asahi Kasei); HDI-Isocyanurate, wie Desmodur^{®} N 3300, N 3600 und N 3790 BA (alle von Bayer), Tolonate^{®} HDT, HDT-LV und HDT-LV2 (von Rhodia), Duranate^{®} TPA-100 und THA-1 00 (von Asahi Kasei) und Coronate^{®} HX (von Nippon Polyurethane); HDI-Uretdione wie Desmodur^{®} N 3400 (von Bayer); HDI-Iminooxadiazindione wie Desmodur^{®} XP 2410 (von Bayer); HDI-Allophanate wie Desmodur^{®} VP LS 2102 (von Bayer); IPDI-Isocyanurate, wie beispielsweise in Lösung als Desmodur^{®} Z 4470 (von Bayer) oder in fester Form als Vestanat^{®} T1890/ 100 (von Degussa); TDI-Oligomere wie Desmodur^{®} IL (von Bayer); sowie gemischte Isocyanurate auf Basis TDI/HDI, zum Beispiel als Desmodur^{®} HL (von Bayer). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur^{®} CD, Desmodur^{®} PF, Desmodur^{®} PC (alle von Bayer) oder Isonate^{®} M 143 (von Dow), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20, Desmodur^{®} VH 20 N und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt ist das Polyisocyanat ausgewählt aus der Gruppe bestehend aus MDI, TDI, HDI und IPDI und Oligomeren, Polymeren und Derivaten der genannten Isocyanate, sowie Mischungen davon.

Bevorzugt enthält das Polyisocyanat Isocyanurat-, Iminooxadiazindion-, Uretdion-, Biuret-, Allophanat-, Carbodiimid-, Uretonimin- oder Oxadiazintrion-Gruppen.

Besonders bevorzugt als Polyisocyanat sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gewichts-%, insbesondere 60 bis 90 Gewichts-%.

Insbesondere bevorzugt als Polyisocyanat ist polymeres MDI und bei Raumtemperatur flüssige MDI-Typen, welche Anteile von MDI-Carbodiimiden oder deren Addukte enthalten.

Mit diesen Polyisocyanaten werden besonders gute Verarbeitungseigenschaften und besonders hohe Festigkeiten erhalten.

Das Polyisocyanat der zweiten Komponente kann Anteile von Isocyanatgruppen aufweisenden Polyurethanpolymeren enthalten. Entweder kann die zweite Komponente ein separat hergestelltes Isocyanatgruppen aufweisendes Polyurethanpolymer umfassen, oder das Polyisocyanat wurde mit mindestens einem Polyol, insbesondere einem Polyetherpolyol, vermischt, wobei die Isocyanatgruppen gegenüber den OH-Gruppen in einem hohen stöchiometrischen Überschuss vorliegen.

Bevorzugt enthält die zweite Komponente nur einen geringen Anteil an Isocyanatgruppen aufweisenden Polyurethanpolymeren, bevorzugt nicht mehr als 30 Gewichts-%, besonders bevorzugt nicht mehr als 20 Gewichts-%, insbesondere nicht mehr als 10 Gewichts-%, bezogen auf die Summe aus Polyisocyanat und Isocyanatgruppen aufweisenden Polyurethanpolymeren.

Am meisten bevorzugt enthält die zweite Komponente kein Isocyanatgruppen aufweisendes Polyurethanpolymer. Eine solche zweite Komponente ist besonders niedrigviskos, was eine gute Verarbeitbarkeit der Zusammensetzung ermöglicht, und sie ermöglicht Zusammensetzungen mit besonders hohen Festigkeiten.

Die Polyurethanzusammensetzung kann als Bestandteil der ersten Komponente zusätzlich weitere mit Isocyanatgruppen reaktionsfähige Substanzen enthalten.

Bevorzugt enthält die erste Komponente keine Polyesterpolyole. Anteile von Polyesterpolyolen bewirken typischerweise ein starkes Verspröden der ausgehärteten Zusammensetzung in der Kälte, was für die Verwendung als strukturellen Klebstoff mit einem möglichst temperaturunabhängigen mechanischen Verhalten im Temperaturbereich von - 35 bis 85 °C sehr unerwünscht ist.

Weiterhin bevorzugt enthält die erste Komponente keine Rizinusöl-basierten Polyole. Diese reduzieren die Zugscherfestigkeit der Zusammensetzung in einem unerwünschten Mass.

Weiterhin kann die Polyurethanzusammensetzung Katalysatoren enthalten, die die Reaktion von Hydroxylgruppen mit Isocyanatgruppen beschleunigen, insbesondere Zinn-, Zink-, Zirkonium- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]undec-7-en (DBU). Zur Erzielung einer Wärmeaktivierung können insbesondere die tertiären Amine, Amidine oder Guanidine mit Phenol oder Carbonsäuren, insbesondere phenolischen oder sonstigen aromatischen Carbonsäuren, reversibel ein Salz oder einen Komplex bilden, welches bei Erhöhung der Temperatur zersetzt wird.

Die Polyurethanzusammensetzung kann neben den bereits erwähnten weitere Bestandteile, wie sie der Fachmann aus der Zweikomponenten-Polyurethanchemie her kennt, enthalten. Diese können in nur einer Komponente oder in beiden vorhanden sein. Als weitere Bestandteile können insbesondere Lösungsmittel, Weichmacher und/oder Extender, Füllstoffe wie insbesondere Russe, Kreiden oder Schichtsilikate, weiterhin Pigmente, Rheologiemodifizierer wie insbesondere amorphe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Als weitere Bestandteile bevorzugt sind anorganische und organische Füllstoffe, wie insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-AluminiumSilikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metallpulver wie Aluminium, Kupfer, Eisen, Silber oder Stahl, PVC-Pulver oder Hohlkugeln.

Die Zugabe von Füllstoffen ist dahingehend von Vorteil, dass dadurch die Festigkeit der ausgehärteten Polyurethanzusammensetzung erhöht wird.

Bevorzugt enthält die Polyurethanzusammensetzung mindestens einen Füllstoff ausgewählt aus der Gruppe bestehend aus Carlciumcarbonat, Kaolin, Baryt, Talk, Quarzmehl, Dolomit, Wollastonit, Kaolin, calciniertes Kaolin und Mica.

Als weitere Bestandteile können weiterhin insbesondere Lösungsmittel, Weichmacher und/oder Extender, Pigmente, Rheologiemodifizierer wie insbesondere amorphe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel und Entschäumer, vorhanden sein.

Eine bevorzugte Polyurethanzusammensetzung enthält eine erste Komponente, welche
- 30 bis 90 Gewichts-%, insbesondere 50 bis 80 Gewichts-%, der Summe aus Diol **A1,** Diol **A2** und Polybutadienpolyol **A3,** und
- 10 bis 70 Gewichts-%, insbesondere 20 bis 40 Gewichts-%, Füllstoffe,
sowie gegebenenfalls weitere Bestandteile enthält.

Eine bevorzugte Polyurethanzusammensetzung enthält eine zweite Komponente, welche 90 bis 100 Gewichts-%, insbesondere 95 bis 100 Gewichts-% einer bei Raumtemperatur flüssigen Formen von MDI enthält.

Die erste und die zweite Komponente werden vorteilhaft derart formuliert, dass ihr Mischungsverhältnis in Gewichtsteilen im Bereich von 10:1 bis 1:1, insbesondere 7.5:1 bis 2:1, liegt.

Das Mischungsverhältnis zwischen den beiden Komponenten ist vorzugsweise derart, dass in der vermischten Polyurethanzusammensetzung das Verhältnis zwischen der Anzahl Isocyanatgruppen und der Anzahl gegenüber Isocyanaten reaktiven Gruppen, vor der Aushärtung ungefähr im Bereich von 1.2 bis 1, bevorzugt 1.15 bis 1.05, liegt.

Die Herstellung der beiden Komponenten erfolgt getrennt voneinander und, zumindest für die zweite Komponente, vorzugsweise unter Ausschluss von Feuchtigkeit. Beide Komponenten werden typischerweise jeweils in einem eigenen Gebinde gelagert. Die weiteren Bestandteile der Polyurethanzusammensetzung können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente beziehungsweise die zweite Komponente der Zusammensetzung enthält.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente mit Isocyanatgruppen der zweiten Komponente beginnt die Aushärtung durch chemische Reaktion. Dabei reagieren die vorhandenen Hydroxylgruppen und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet die Polyurethanzusammensetzung zu einem festen Material aus. Dieser Vorgang wird auch als Vernetzung bezeichnet.

Ein weiterer Gegenstand der Erfindung ist somit auch eine ausgehärtete Polurethanzusammensetzung, erhalten aus der Aushärtung der Polyurethanzusammensetzung wie im vorliegenden Dokument beschrieben.

Die beschriebene zweikomponentige Polyurethanzusammensetzung ist vorteilhaft verwendbar als struktureller Klebstoff oder als Vergussmasse.

Die Erfindung betrifft somit auch ein Verfahren zum Verkleben von einem ersten Substrat mit einem zweiten Substrat, welches die Schritte umfasst:
- Mischen der vorgängig beschriebenen ersten und zweiten Komponente,
- Applizieren der vermischten Polyurethanzusammensetzung auf mindestens eine der zu verklebenden Substratoberflächen,
- Fügen der zu verklebenden Substrate innerhalb der Offenzeit,
- Aushärten der Polyurethanzusammensetzung.

Dabei können die beiden Substrate aus dem gleichen oder unterschiedlichen Materialien bestehen.

Die Erfindung betrifft somit weiterhin auch ein Verfahren zum Verfüllen von Fugen und Spalten zwischen zwei Substraten, welches die Schritte umfasst:
- Mischen der vorgängig beschriebenen ersten und zweiten Komponente,
- Applizieren der vermischten Polyurethanzusammensetzung in die Fuge oder den Spalt,
- Aushärten der Polyurethanzusammensetzung.

In diesen Verfahren zum Verkleben oder zum Verfüllen von Fugen und Spalten sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesen Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis.

Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus dem beschriebenen Verfahren zum Verkleben entsteht ein Artikel, bei welchem die Zusammensetzung zwei Substrate miteinander verbindet.

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Die beschriebene Polyurethanzusammensetzung zeichnet sich durch eine hohe Festigkeit, Dehnbarkeit und Elastizität, welche über einen weiten Temperaturbereich von - 35 bis 85 °C recht konstant sind, und über gute, weitgehend temperaturunabhängige, Haftungseigenschaften auf metallischen Substraten aus. Aufgrund dieser Eigenschaften ist sie ganz besonders geeignet als struktureller Klebstoff für Verklebungen, welche unter Umgebungstemperaturen im Freien beansprucht werden.

Ein weiterer Gegenstand der Erfindung ist somit auch die Verwendung der beschriebenen Polyurethanzusammensetzung als struktureller Klebstoff zum Verkleben von zwei Substraten.

Durch den hohen Anteil an Polybutadienpolyol A3 ist die ausgehärtete Zusammensetzung sehr hydrophob und wasserabweisend. Dies kann einen hohen Wasserdampfdiffusionswiderstand des Materials begünstigen. Dadurch ist die Zusammensetzung insbesondere auch geeignet für Verklebungen, bei welchen wasserdampfempfindliche Komponenten, beispielsweise elektonische Bauteile, klebend abgedichtet werden sollen.

Ebenfalls vorteilhaft verwendbar ist die beschriebene Polyurethanzusammensetzung als Vergussmasse, insbesondere als Vergussmasse für das Verfüllen von Spalten und Fugen, zu Reparaturzwecken, als Ballastausgleichsmasse oder zum Schutz von elektronischen Bauteilen.

Die Polyurethanzusammensetzung wird weiter vorzugsweise als Vergussmasse, insbesondere als Elektrovergussmasse, eingesetzt. In einem weiteren Aspekt umfasst die Erfindung daher die Verwendung einer zweikomponentigen Polyurethanzusammensetzung als Vergussmasse, insbesondere als Elektrovergussmasse.

Typische Bespiele für Anwendungen der erfindungsgemässen Polyurethanzusammensetzungen finden sich im Gebiet der Elektrovergussmassen

In einem weiteren Aspekt umfasst die Erfindung daher ein Verfahren zu einem Verfüllen von Fugen und Spalten in einem Substrat umfassend die Schritte
a) Mischen der ersten Komponente und der zweiten Komponente einer zweikomponentigen Polyurethanzusammensetzung wie sie vorgehend beschrieben ist,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.

Als Substrate besonders geeignet sind Metall, Kunststoff, Holz, Glas, Keramik und faserverstärkte Kunststoffe, insbesondere Metall und faserverstärkte Kunststoffe.

In einem weiteren Aspekt umfasst die Erfindung daher auch einen verfüllten Artikel, welcher nach dem vorgehend beschriebenen Verfahren verfüllt wurde.

### Beispiele

### verwendete Substanzen:

| | |
|---|---|
| BPIP | Propoxyliertes Bisphenol A, mittleres Molekulargewicht ca. 400 g, OH-Zahl 280 mg KOH/g (Simulsol™ BPIP/P von Seppic) |
| TOMB | Butoxyliertes Trimethylolpropan, mittleres Moldkulargewicht ca. 650 g, OH-Zahl ca. 260 mg KOH/g (Simulsol™ TOMB von Seppic) |
| Ethylhexandiol | 2-Ethyl-1,3-hexandiol |
| Poly bd R45 | Polybutadienpolyol mit phmären OH-Gruppen, OH-Funktionalität 2.4-2.6, mittleres Molekulargewicht ca. 2800 g, OH-Zahl 47.1 mg KOH/g (Poly bd^{®} R-45HTLO von Cray Valley) |
| Monoalkohol | 1-P henoxypropan-2-ol |
| Poly bd R20 | Polybutadienpolyol mit phmären OH-Gruppen, OH-Funktionalität 2.4-2.6, mittleres Molekulargewicht ca. 1300 g, OH-Zahl ca. 101 mg KOH/g (Poly bd^{®} R20LM von Cray Valley) |
| Krasol | Polybutadiendiol, OH-Funktionalität ca. 1.9, mittleres Molekulargewicht ca. 3000 g, OH-Zahl ca. 36 mg KOH/g (Krasol^{®} LBH P-3000 von Cray Valley) |
| Polycin | Ricinusöl-basiertes Polyol, OH-Funktionalität 2.2, mittleres Molekulargewicht 2610 g, OH-Zahl 52 mg KOH/g (Polycin^{®} GR-50 von Vertellus) |
| Füllstoff | mineralischer Füllstoff (Sillitin Z 86 von Hoffmann Mineral) |
| Additive | Stabilisatoren gegen Oxidation und UV-Licht und Dibutylzinndilaurat-Katalysator |
| Polyisocyanat | modifiziertes Diphenylmethandiisocyanat enthaltend MDI-Carbodiimid-Addukte, bei Raumemperatur flüssig, NCO-Gehalt 29.4 Gewichts-% (Isonate^{®} M 143 von Dow) |

### Herstellung von Polyurethanzusammensetzungen

Für jede Zusammensetzung wurden die in der Tabelle 1 angegebenen Inhaltsstoffe in den angegebenen Mengen (in Gewichtsteilen) der ersten Komponente-1 mittels eines Vakuumdissolvers unter Feuchtigkeitsausschluss zu einer homogenen Paste verarbeitet und aufbewahrt. Ebenso wurden die in der Tabelle 1 angegebenen Inhaltsstoffe der zweiten Komponente-2 verarbeitet und aufbewahrt. Anschliessend wurden die beiden Komponenten mittels eines SpeedMixers^{®} (DAC 150 FV, Hauschild) während 30 Sekunden zu einer homogenen Paste verarbeitet und diese unverzüglich folgendermassen geprüft:
Zur Bestimmung der mechanischen Eigenschaften wurde der Klebstoff in Hantelform gemäss ISO 527, Teil 2, 1 B, gebracht und während 24 h bei 23°C und anschliessend während 3h bei 80°C gelagert bzw. ausgehärtet. Nach einer Konditionierungszeit von 24h bei der in der Tabelle 2 angegebenen Temperatur (- 35 °C bzw. 23 °C bzw. 85 °C) wurden das Elastizitätsmodul im Bereich von 0.05 bis 0.25 % Dehnung (" **E-Modul")** die **Zugfestigkeit** und die **Bruchdehnung** der so hergestellten Probekörper gemäss ISO 527 auf einer Zwick Z020 Zugprüfmaschine bei der jeweils in der Tabelle angegebenen Temperatur und einer Prüfgeschwindigkeit von 50 mm/ min gemessen.

Zur Messung der **Zugscherfestigkeit** wurden diverse Prüfkörper hergestellt, wobei der Klebstoff jeweils 1 Minute nach Abschluss der Mischzeit zwischen zwei mit Heptan entfetteten KTL-lackierten Stahlblechen in einer Schichtdicke von 2 mm und auf einer überlappenden Klebefläche 15 x 45 mm aufgebracht wurde. Die Prüfkörper wurden während 24 h bei 23°C und anschliessend während 3h bei 80°C gelagert bzw. ausgehärtet. Nach einer Konditionierungszeit von 24h bei der in der Tabelle 2 angegebenen Temperatur (-35 °C bzw. 23 °C bzw. 85 °C) wurde die Zugscherfestigkeit nach DIN EN 1465 bestimmt.

Die **Tg-**Werte (Glasumwandlungspunkte) wurden bestimmt anhand von DMTA-Messungen an scheibenförmigen Proben (Dicke 2-3 mm, Durchmesser 10 mm), welche während 7 Tagen im Normklima (23 °C, 50 % relative Feuchtigkeit) ausgehärtet waren, mit einem Mettler DMA/SDTA 861 e Gerät. Die Messbedingungen waren: Messung in Scherung, 10 Hz Anregungsfrequenz und Aufheizrate von 5 K/min. Die Proben wurden auf - 60 °C abgekühlt und unter Bestimmung des komplexen Schermoduls G^{*} [MPa] auf 200 °C erwärmt, wobei ein Maximum in der Kurve für den Verlustwinkel "tan δ" als Tg-Wert abgelesen wurde.

Die Resultate sind in der Tabellen 2 angegeben.

Die Angaben **A3/(A1+A2), A1/A2,** und **A4/(A1+A2)** in der Tabelle 1 beziehen sich auf die Gewichtsverhältnisse der vorhadenen Diole **A1, A2,** Polybutadienpolyol **A3** und Monoalkohol **A4** in der jeweiligen Zusammensetzung. Die Angabe "% **A3** an Polyolen" in der Tabelle 1 bezieht sich auf den Anteil an Polybutadienpolyol **A3** bezogen auf alle in der ersten Komponente vorhandenen Polyole in Gewichts-%.

Bei ***Z-1*** bis ***Z-4*** handelt es sich um erfindungsgemässe Beispiele. Bei ***Rf.1*** bis ***Rf.6*** handelt es sich um Vergleichsbeispiele.

**Tabelle 1**

| **Beispiele** | | ***Z-1*** | ***Z-2*** | ***Z-3*** | ***Z-4*** | ***Rf.1*** | ***Rf.2*** | ***Rf.3*** | ***Rf.4*** | ***Rf.5*** | ***Rf.6*** |
|---|---|---|---|---|---|---|---|---|---|---|---|
| Komponente-1: | | | | | | | | | | | |
| | BPIP | 3.1 | 3.0 | 3.1 | 3.1 | 3.1 | 3.0 | - | 3.0 | 3.0 | 3.0 |
| | TOMB | - | - | - | - | - | - | 3.0 | - | - | - |
| | Ethylhexandiol | 5.2 | 5.0 | 7.9 | 5.0 | 5.2 | - | 5.0 | 5.0 | 5.0 | 5.0 |
| | 1,4-Butandiol | - | - | - | - | - | 5.0 | - | - | - | - |
| | Poly bd R45 | 60.6 | 58.8 | 57.7 | 33.0 | 82.4 | 58.8 | 58.8 | - | - | - |
| | Monoalkohol | - | 2.9 | - | - | - | 2.9 | 2.9 | 2.9 | 2.9 | 2.9 |
| | Poly bd R20 | - | - | - | - | - | - | - | 58.8 | - | - |
| | Krasol | - | - | - | - | - | - | - | - | 58.8 | - |
| | Polycin | - | - | - | - | - | - | - | - | - | 58.8 |
| | Füllstoff | 30.6 | 29.8 | 30.8 | 58.4 | 8.9 | 29.9 | 29.9 | 29.8 | 29.8 | 29.8 |
| | Additive | 0.5 | 0.5 | 0.5 | 0.5 | 0.5 | 0.4 | 0.4 | 0.5 | 0.5 | 0.5 |
| **A3/(A1+A2)** | | 7.3 | 7.4 | 5.2 | 4.1 | 9.9 | - | - | - | - | - |
| **A1/A2** | | 0.60 | 0.60 | 0.39 | 0.62 | 0.60 | - | - | 0.60 | 0.60 | 0.60 |
| % **A3** an Polyolen | | 88% | 88% | 84% | 80% | 91% | 88% | 88% | - | - | - |
| **A4/(A1+A2)** | | - | 0.36 | - | - | - | - | - | 0.36 | 0.36 | 0.36 |
| Komponente-2: | | | | | | | | | | | |
| | Polyisocyanat | 22.0 | 24.0 | 28.0 | 18.0 | 25.0 | 31.0 | 24.0 | 36.0 | 23.0 | 25.0 |

**Tabelle 2 "n.b." steht für "nicht bestimmt"**

| **Beispiele** | ***Z-1*** | ***Z-2*** | ***Z-3*** | ***Z-4*** | ***Rf.1*** | ***Rf.2*** | ***Rf.3*** | ***Rf.4*** | ***Rf.5*** | ***Rf.6*** |
|---|---|---|---|---|---|---|---|---|---|---|
| **Zugscherfestigkeit** [MPa] | | | | | | | | | | |
| - 35 °C | 14.3 | 10.4 | 13.6 | 12.4 | 14.6 | 11.3 | 13.8 | 10.9 | 12 | 5.9 |
| 23 °C | 9.2 | 7.9 | 9.5 | 8.6 | 5.5 | 3.1 | 6.2 | 5.1 | 2.1 | 0.3 |
| 85 °C | 2.1 | 2.1 | 3.2 | 4.2 | 0.7 | 0.9 | 1.2 | 0.8 | 0.1 | n.b. |

| **Zugfestigkeit** [MPa] | | | | | | | | | | |
|---|---|---|---|---|---|---|---|---|---|---|
| - 35 °C | 27.9 | 24.1 | 30.3 | 31.7 | 39.3 | 21.6 | 23.9 | 36.1 | n.b. | n.b. |
| 23 °C | 10.1 | 8.4 | 13.2 | 15.6 | 8.0 | 6.4 | 10.0 | 13.5 | n.b. | n.b. |
| 85 °C | 2.6 | 1.5 | 3.8 | 7.9 | 1.6 | 2.3 | 1.4 | 2.0 | n.b. | n.b. |

| **Bruchdehnung** [%] | | | | | | | | | | |
|---|---|---|---|---|---|---|---|---|---|---|
| - 35 °C | 175 | 170 | 145 | 22 | 285 | 160 | 163 | 28 | n.b. | n.b. |
| 23 °C | 220 | 320 | 175 | 38 | 275 | 165 | 270 | 170 | n.b. | n.b. |
| 85 °C | 135 | 410 | 155 | 80 | 85 | 155 | 240 | 140 | n.b. | n.b. |

| **E-Modul** [MPa] | | | | | | | | | | |
|---|---|---|---|---|---|---|---|---|---|---|
| - 35 °C | 137 | 167 | 153 | 632 | 55 | 122 | 137 | 1014 | n.b. | n.b. |
| 23 °C | 24 | 32 | 87 | 337 | 11 | 21 | 31 | 151 | n.b. | n.b. |
| 85 °C | 4 | 1 | 5 | 46 | 3 | 5 | 1 | 2 | n.b. | n.b. |
| **Tg** [°C] | -58 / 66 | -55 / 50 | -65 / 76 | n.b. | n.b. | -58 / 40 / 110 | -58 / 55 | 40 | n.b. | n.b. |

## Patentansprüche

1. Polyurethanzusammensetzung bestehend aus einer ersten und einer zweiten Komponente; wobei
- die erste Komponente
- mindestens ein alkoxyliertes aromatisches Diol **A1** mit einem mittleren Molekulargewicht im Bereich von 300 bis 1 '000 g/mol,
- mindestens ein aliphatisches oder cycloaliphatisches Diol **A2** mit einem Molekulargewicht im Bereich von 90 bis 200 g/mol, welches kein lineares Alkylendiol mit zwei primären OH-Gruppen darstellt,
- mindestens ein Polybutadienpolyol **A3** mit einer mittleren OH-Funktionalität im Bereich von 2.1 bis 2.9, insbesondere 2.3 bis 2.7, und mit einem mitleren Molekulargewicht im Bereich von 2000 bis 4000 g/mol, insbesondere 2500 bis 3000 g/mol, umfasst,und
- die zweite Komponente
- mindestens ein Polyisocyanat umfasst;
wobei das Diol **A1,** das Diol **A2** und das Polybutadienpolyol **A3** in einer solchen Menge vorhanden sind, dass
- das Gewichtsverhältnis **A1/A2** im Bereich von 0.1 bis 1, bevorzugt 0.2 bis 0.7, insbesondere 0.3 bis 0.7, liegt,
- das Gewichtsverhältnis **A3/(A1+A2)** im Bereich von 3 bis 9, bevorzugt 4 bis 8, insbesondere 5 bis 8, liegt, und
- der Anteil an Polybutadienpolyol **A3** bezogen auf alle in der ersten Komponente vorhandenen Polyole im Bereich von 50 bis 90 Gewichts-%, bevorzugt 65 bis 90 Gewichts-%, insbesondere 75 bis 90 Gewichts-%, liegt.

2. Polyurethanzusammensetzung gemäss Anspruch 1, **dadurch gekennzeichnet, dass** das alkoxylierte aromatische Diol **A1** ein propoxyliertes Bisphenol A oder ein propoxyliertes Bisphenol F, insbesondere ein propoxyliertes Bisphenol A, darstellt.

3. Polyurethanzusammensetzung gemäss einem der vorhergehenden Ansprüche, **dadurch gekennzeichnet, dass** das aliphatische oder cycloaliphatische Diol **A2** ausgewählt ist aus der Gruppe bestehend aus 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol, 1,2-Hexandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

4. Polyurethanzusammensetzung gemäss einem der vorhergehenden Ansprüche, **dadurch gekennzeichnet, dass** die erste Komponente zusätzlich einen Monoalkohol **A4** mit einem Molekulargewicht im Bereich von 140 bis 340 g/mol umfasst, wobei der Monoalkohol **A4** in einer solchen Menge vorhanden ist, dass das Gewichtsverhältnis **A4/(A1+A2)** im Bereich von 0.1 bis 0.5, bevorzugt 0.2 bis 0.4, liegt.

5. Polyurethanzusammensetzung gemäss einem der vorgehenden Ansprüche, **dadurch gekennzeichnet, dass** das Polyisocyanat eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten ist.

6. Polyurethanzusammensetzung gemäss einem der vorgehenden Ansprüche, **dadurch gekennzeichnet, dass** die zweite Komponente kein Isocyanatgruppen aufweisendes Polyurethanpolymer enthält.

7. Polyurethanzusammensetzung gemäss einem der vorgehenden Ansprüche, **dadurch gekennzeichnet, dass** die erste Komponente keine Polyesterpolyole enthält.

8. Polyurethanzusammensetzung gemäss einem der vorgehenden Ansprüche, **dadurch gekennzeichnet, dass** die erste Komponente keine Rizinusöl-basierten Polyole enthält.

9. Polyurethanzusammensetzung gemäss einem der vorgehenden Ansprüche, **dadurch gekennzeichnet, dass** die erste Komponente
- 30 bis 90 Gewichts-%, insbesondere 50 bis 80 Gewichts-%, der Summe aus Diol **A1,** Diol **A2** und Polybutadienpolyol **A3,** und
- 10 bis 70 Gewichts-%, insbesondere 20 bis 40 Gewichts-%, Füllstoffe, sowie gegebenenfalls weitere Bestandteile enthält.

10. Polyurethanzusammensetzung gemäss einem der vorgehenden Ansprüche, **dadurch gekennzeichnet, dass** die zweite Komponente 90 bis 100 Gewichts-%, insbesondere 95 bis 100 Gewichts-% einer bei Raumtemperatur flüssigen Formen von 4,4'-, 2,4'- oder 2,2'-Diphenylmethandiisocyanat und beliebige Gemische dieser Isomeren (MDI) enthält.

11. Polyurethanzusammensetzung gemäss einem der vorgehenden Ansprüche, **dadurch gekennzeichnet, dass** das Mischungsverhältnis in Gewichtsteilen zwischen der ersten und der zweiten Komponente im Bereich von 10:1 bis 1:1, insbesondere 7.5:1 bis 2:1, liegt.

12. Verfahren zum Verkleben von einem ersten Substrat mit einem zweiten Substrat, umfassend die Schritte
- Mischen der ersten und der zweiten Komponente einer Polyurethanzusammensetzung gemäss einem der Ansprüche 1 bis 11,
- Applizieren der vermischten Polyurethanzusammensetzung auf mindestens eine der zu verklebenden Substratoberflächen,
- Fügen der zu verklebenden Substrate innerhalb der Offenzeit
- Aushärten der Polyurethanzusammensetzung.

13. Artikel entstanden aus dem Verfahren zum Verkleben gemäss Anspruch 12.

14. Verwendung einer Polyurethanzusammensetzung gemäss einem der Ansprüche 1 bis 11 als struktureller Klebstoff für das Verkleben von zwei Substraten.

15. Verfahren zu einem Verfüllen von Fugen und Spalten in einem Substrat umfassend die Schritte
a) Mischen der ersten Komponente und der zweiten Komponente einer Polyurethanzusammensetzung gemäss einem der Ansprüche 1 bis 11,
b) Applizieren der gemischten Polyurethanzusammensetzung in die zu überbrückende Fuge zwischen zwei Substraten oder in den zu verfüllenden Spalt auf der Oberfläche eines Substrates,
c) Aushärten der Polyurethanzusammensetzung in der Fuge oder im Spalt.
